Europäisches Patentamt

(19) European Patent Office

Office européen des brevets

(11) Publication number: **0 195 134**
**B1**

(12) **EUROPEAN PATENT SPECIFICATION**

(45) Date of publication of patent specification: **02.08.89**

(21) Application number: **85200380.5**

(22) Date of filing: **14.03.85**

(51) Int. Cl.⁴: **A 46 D 3/08**

(54) **Brush body holder carrier for brush manufacturing machines.**

| | |
|---|---|
| (43) Date of publication of application:<br>**24.09.86 Bulletin 86/39** | (73) Proprietor: **G.B. BOUCHERIE, N.V.**<br>**Stuivenbergstraat 104-141**<br>**B-8700 Izegem (BE)** |
| (45) Publication of the grant of the patent:<br>**02.08.89 Bulletin 89/31** | (72) Inventor: **Boucherie, Leonel**<br>**Potaardestraat 3**<br>**B-8810 Roeselare-Rumbeke (BE)** |
| (84) Designated Contracting States:<br>**BE DE GB IT** | (74) Representative: **Donné, Eddy**<br>**M.F.J.Bockstael Arenbergstraat 13**<br>**B-2000 Anvers (BE)** |
| (56) References cited:<br>**DE-A-3 146 183**<br>**DE-B-1 191 334**<br>**DE-C- 637 998**<br>**DE-C- 976 592**<br>**GB-A- 275 692**<br>**GB-A- 296 687**<br>**GB-A-1 073 132**<br>**US-A-2 396 941**<br>**US-A-2 433 192**<br>**US-A-2 851 308** | |

Courier Press, Leamington Spa, England.

## Description

This invention concerns a brush body holder carrier for brush manufacturing machines, in particular of the type having at least one brush body holder which is rotatable in a plane parallel to the plane formed by the clamped brush body.

More particularly, the invention concerns a brush body holder carrier comprising one or more rotatable brush body holders, whereby through intermittent movements this carrier places each brush body holder successively in front of various different processing tools.

In a particular application, the invention concerns a brush body holder carrier formed by a drum upon which several rotatable brush body holders are fitted around the periphery, e.g. such as used for the manufacture of toothbrushes, nailbrushes and other types of precision brushes.

It is well-known that in the manufacture of brushes and in particular toothbrushes, especially as bundles of bristels are fitted into the brush bodies, the so-called staples or anchors with which the bundles of bristles are attached into the brush bodies are preferably fitted at a specific angle with respect to the principal shafts along which the holes in the brush body which are to be filled are located.

This prevents the brush bodies from cracking or splitting due to weakening along the direction in which the staples or anchors are fitted. This latter is of especial importance in the manufacture of toothbrushes, in which the shortest connecting distance between the holes to be filled is extremely small and thus a crack can easily form.

In brush manufacturing machines of a known type in which several brush body holders are fitted onto a drum, these brush body holders are not rotatable in a plane parallel to the plane formed by the clamped brush body.

Introducing the staples or anchors at an angle is thus performed by placing the filling mechanism through which the bristles are fitted into the brush body at a specific angle. However, a disadvantage of such a mechanism is that both the filling tool and the bristle container are located at an angle, thus making it difficult to feed the bristles into the bristle container or the bristle store.

Other well-known machines are fitted with brush body holders which are attached to the drum at a specific, predetermined angle or with a drum with brush body holders which lie overall at an angle.

There are various disadvantages to such mechanisms. First and foremost, when changing over to another angle, e.g. when another type of brush is to be manufactured, either the entire drum or the brush body holders have to be completely detached each time and reattached to another angle. Moreover, all the manufacturing tools which are fitted alongside the aforementioned drum also have to be manufactured so that they are adjustable to different angles.

The general teaching to rotate brush body holders with respect to a movable carrier is already known of US—A—2.433.192.

The latter discloses a brush making machine the carrier of which consists of a disc shaped working table rotatable in its center. The brush body holders are rotatably mounted at one surface of the working table. When the carrier is rotated, each brush body holder mounted onto said carrier is also rotated with respect to the carrier by means of cam mechanisms. Hereby, the brush body holders are rotated to align the holes to be filled with the filling tool. As a result thereof, each of the anchors show an inclined position with respect to the principal axis of the brush body, the inclination of each anchor being different and being a function of the position of the hole.

Quite obviously the device according to US—A—2.433.192 shows the disadvantage that the said inclination cannot be chosen at will, but is strictly dependent upon the position of each hole with respect to the brush body. This also means that with this known device it is impossible to carry out a process in which the inclination remains zero for all holes.

The object of the present invention is to provide for an improved brush body holder carrier having brush body holders which allow that each brush body can be presented under the processing tools in a rotated position at any desired angle with respect to the respective tools. This means that different positions are possible with respect to the different tools. For example the holders may be in a non-rotated position when passing underneath the loading station and during their presentation in front of the drilling tool, but may be set at an angle when brought in front of the filling tool.

Furthermore, the present invention is intended to allow, in an economical way, the staples or anchors to be attached into the brush bodies at their most optimum angle, i.e. the angle according to which no cracking or splitting of the brush bodies will occur.

Still another advantage of the invention consists in that the anchors or staples may be secured into the holes of the brush body all at the same angle. Consequently the free ends of the various bristle tufts obtained in this way form a uniform pattern.

In order to obtain the abovesaid objects and in order to offer a solution to the disadvantages of the well known devices, the present invention provides for an improved brush body holder carrier for brush manufacturing machines, of the type having at least one brush body holder fitted onto a drum, whereby the brush bodies are transferred from one processing station to another by rotating said drum and whereby during carrying out a full process in a processing station the said brush body holder is not moving in relation to the drum, characterised in that the brush body holder carrier is provided with means by which the brush body holder can rotate with respect to the said drum in a plane parallel to the plane of the brush body, and with driving means for rotating the brush body holder through an adjustable angle between the end of the process and the start of the next process, such in order to set the brush body holder at any required angle with respect to said drum.

With a view to demonstrating the characteristics of the invention to better advantage, a description is given below, purely by way of an example and without any limiting character, of a preferred form of application applied onto a brush manufacturing machine with a drum-type brush body holder, with reference to the accompanying sketches in which:

Figure 1 shows a schematic view of a drum with several brush body holders as described by the invention, in which these are fitted along the periphery of this drum;

Figure 2 shows a view in the direction of arrow F2 in figure 1, this figure thus showing a practical embodiment of a brush body holder carrier;

Figure 3 shows a cross section along line III—III in figure 2;

Figure 4 shows a view in the direction of arrow F4 in figure 1 for a practical embodiment in which this figure also shows the rotated brush body holder from figure 2;

Figure 5 shows a cross section along line V—V in figure 4.

As shown in the figures above, the brush body holders 1, which are mounted onto the said carrier, consist primarily of a component 2 upon which a number of brush body clamps are fitted. These brush body clamps can, for example, be formed by a stop 3 and a number of movable pegs 4. This component 2 is attached in a rotatable manner onto the carrier, which for instance is a drum 5.

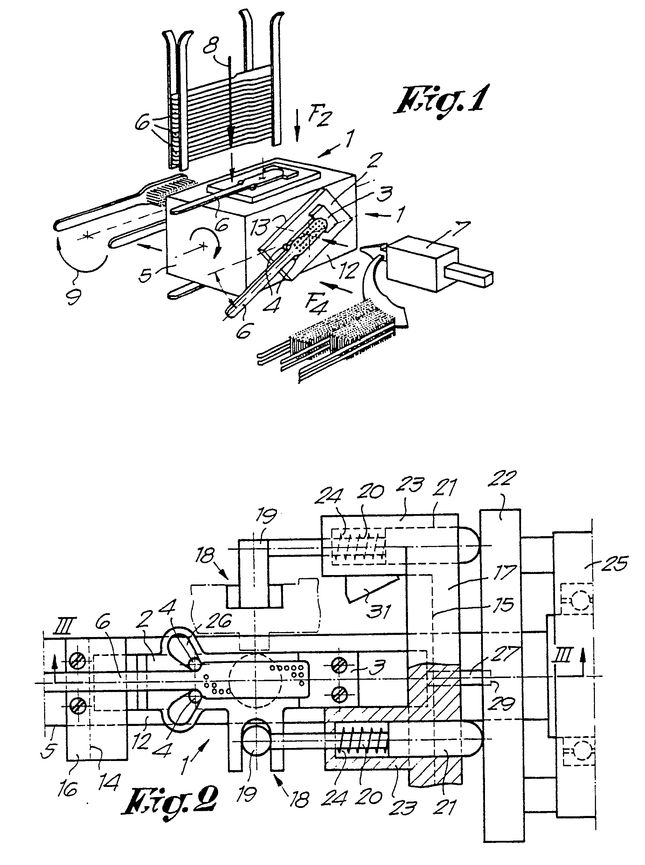

The brush body holders 1 are attached and fitted with the necessary means in such a way as that they extend in the direction of the axis of rotation of the drum 5, while in certain cases (when they are located in front of certain tools) they will automatically rotate to a specific angle. More particularly, as is shown in figure 1, this rotation occurs when the brush body holders 1 (and thus also the clamped brush bodies 6) are located in front of the filling mechanism 7. Figure 1 also shows clearly that although the bundles of bristles are introduced into the brush bodies 6 at an angle, the inflow 8 of the brush bodies 6 and the outflow 9 of the manufactured brushes can occur in a normal manner without requiring certain components to be set at an angle.

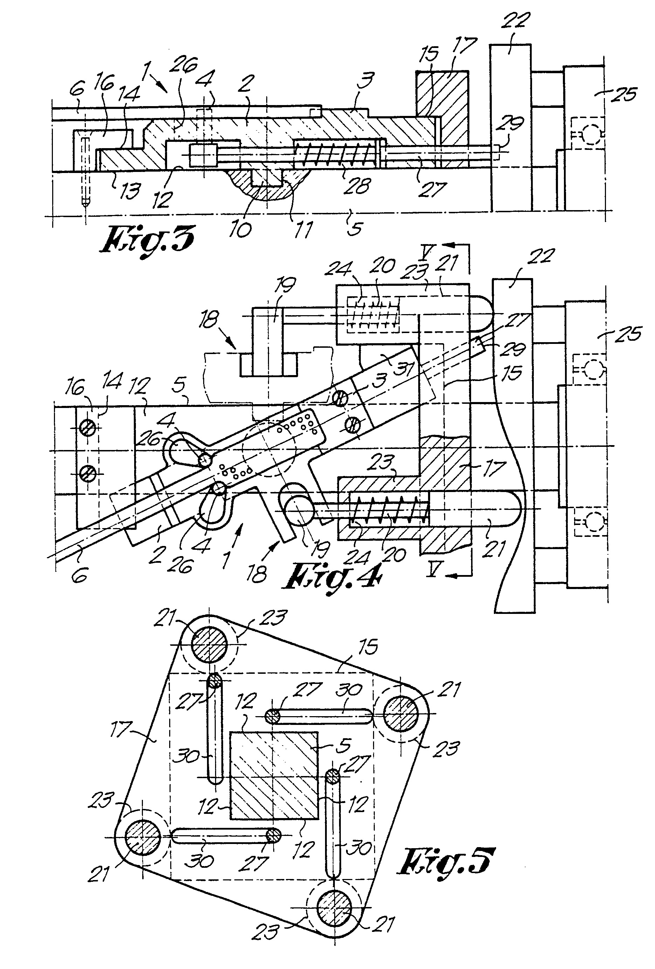

A practical and detailed embodiment of the device of figure 1 is shown in figures 2, 3, 4 and 5.

In this embodiment, the component 2 is fixed in a rotatable manner to the drum 5 by means of a small shaft 10 which is firmly attached to this component, with this small shaft 10 fitting exactly into a hollow 11 in the drum 5. The drum 5 is fitted with four flat sides 12 in such a way that the bottom edge 13 of component 2 is able to slide over these sides 12. Component 2 is held against the flat sides 12 by means of stops 14 and 15, the first of which is formed, for instance, by a small component 16 in which a hollow has been made and which is screwed to the drum 5, and the second of which consists, for instance, of a hollow which has been made in a projection of flange 17.

Component 2 is also fitted with a fork 18 in which the devices can grip in order to make the brush body holder 1 rotate at the desired places and/or moments.

In the application shown in figures 2—5, the aforementioned devices primarily consist of a peg 19 which engages in the fork 18 provided that a bar 20 is connected to a curve follower 21 and also of a fixed guide 22 to subject this curve follower 21 to a specific movement.

The curve follower 21 and a part of the bar 20 are here contained in a cylinder 23 which is attached to the flange 17, and fitted around this bar 20 is a spring 24 which presses the curve follower 21 towards the fixed guide 22.

The fixed guide 22 consists of a circular profiled ring which runs concentrically around the drum 5 and which is attached to the frame 25 of the brush manufacturing machine or suchlike.

The brush body holder 1 as described by the invention is fitted with brush body clamps which are well-known in their own right and which consist of a stop 3 firmly attached to component 2 and, for example, two pegs 4, such that a brush body 6, in this case a toothbrush, can be gripped on one side by the stop 3 and on the other side by the pegs 4. The pegs 4 are slideable in groove 26 in such a way that they may be tightened against the brush body 6.

Devices are also fitted to operate the brush body clamps. In the application shown in figure 3, these consist of a rod 27 located in component 2 and connected to one tip of the pegs 4 and a compression spring 28. These are arranged in such a way that the rod 27 is pushed in one direction under the influence of the compression spring 28 so that the pegs 4 connect up against the brush body. The other, free, tip 29 of the rod 27 extends out of the component 2 in such a way that it may be pressed in, by means of appropriate devices not shown in the figures, in order to enable the brush body clamps to be opened at the desired moment.

The free tip 29 of the rod 27 may move freely back and forth in a groove 30 which is located in the flange 17. The rod 27 may be operated in any appropriate manner.

It is obvious, partly from the figures, that in this application the construction described above is fitted onto the four sides of the drum 5. Furthermore, each of the brush body holders 1 in the application shown is also fitted with an adjustable stop 31, located at any suitable position, in order to limit the rotation of the brush body holder 1.

The operation of the invention may easily be deduced from the figures. Whenever the drum 5 is rotated through 90 degrees, the curve follower 21 slides over the fixed guide 22 and, depending upon the profile of the fixed guide 22, this curve follower 21 will or will not be pushed further or less far into the cylinder 23. In the unrotated state, as shown in figure 2, the curve follower 21 is in its pressed in position. Figure 4 shows a rotated brush body holder, in which the rotation has been obtained by the curve following component 21 having been able to move out of the cylinder 23, and in which the rectilinear movement of this curve follower 21 has been converted into a rotation of the component 2 by means of the bar 20, the pin 19 and the engagement of this pin 19 in the fork 18.

In the application shown in the figures, when the brush body holder 1 rotates, the curve follower 21 disengages completely from the fixed guide 22 and the angle of the rotation is determined by the adjustable stop 31. It is also obvious that the fixed stop 31 may be omitted if care is taken to ensure that the curve follower 21 remains permanently in contact with the fixed guide 22, in which case this latter must be fitted with an appropriate profile such as to give the desired angle setting.

This last variation may be used to change over to another angle by replacing the fixed guide 22 by another fixed guide with a different profile.

The centre of rotation of the brush body holder should preferably but not necessarily be located such that it is in the centre of that part of the brush bodies into which the bristles are fitted.

## Claims

1. Brush body holder carrier for brush manufacturing machines, of the type having at least one brush body holder (1) fitted onto a drum (5), whereby the brush bodies are transferred from one processing station to another by rotating said drum and whereby during carrying out a full process in a processing station the said brush body holder (1) is not moving in relation to the drum (5), characterised in that the brush body holder carrier is provided with means by which the brush body holder (1) can rotate with respect to the said drum (5) in a plane parallel to the plane of the brush body (6), and with driving means for rotating the brush body holder (1) through an adjustable angle between the end of any process and the satrt of the next process, such in order to set the brush body holder (1) at any required angle with respect to said drum (5).

2. Brush body holder carrier according to claim 1, characterised in that the means enabling the brush body holder (1) to rotate consist of a rotatable linkage between the brush body holder (1) itself and the drum (5), the linkage being composed of a small shaft (10) which is firmly attached to the rotatable brush body holder (1) and which extends into a hollow (11) in the drum.

3. Brush body holder carrier according to claim 1, characterised in that the driving means are composed of a curve follower (21) which is attached to the brush body holder (1) and which is pressed against a fixed guide (22) by means of a spring (24) such that the movement of this curve follower (21) imparts a specific angular rotation to the brush body holder (1).

4. Brush body holder carrier as described in claim 3, characterised in that the curve follower (21) is coupled to the brush body holder (1) by means of a pin and a fork linkage.

5. Brush body holder carrier according to claim 3, characterised in that the fixed guide (22) is composed of a profiled template or ring which is attached in a stationary manner to the frame (25) of a brush manufacturing machine in such a way that the curve followers (21) follow the profile.

6. Brush body holder carrier as described in any of the aforementioned claims, characterised in that in the rotated position of the brush body holder (1) the follower (21) is no longer in contact with the fixed guide (22) while the brush body holder (1) is in contact with an adjustable stop (31) which is stationary with respect to the drum (5).

## Patentansprüche

1. Bürstenkörperhalterträger für Bürstenherstellungsmaschinen des Typs, der wenigstens einen auf eine Trommel (5) angebrachten Bürstenkörperhalter (1) aufweist, mit dem die Bürstenkörper durch Drehung der Trommel von einer Verarbeitungsstation zu einer anderen übertragen werden, und wobei während der Durchführung eines vollständigen Zyklus in einer Verarbeitungsstation der Bürstenkörperhalter (1) in Bezug auf die Trommel (5) nicht bewegt, dadurch gekennzeichnet, daß der Bürstenkörperhalterträger mit einem Mittel, durch welches der Bürstenkörperhalter (1) in Bezug auf die Trommel (5) in einer Ebene parallel zur Ebene des Bürstenkörpers (6) drehen kann, und mit einem Antriebmittel zum Drehen des Bürstenkörperhalters (1) um einen regelbaren Winkel zwischen dem Ende eines beliebigen Zyklus und dem Beginn des nächsten Zyklus versehen ist, mit dem Zweck, den Bürstenkörperhalter (1) auf einen beliebigen Winkel in Bezug auf die Trommel (5) einzustellen.

2. Bürstenkörperhalterträger nach Anspruch 1, dadurch gekennzeichnet, daß das Mittel zum Drehen des Bürstenkörperhalters (1) aus einer drehbaren Verbindung zwischen dem Bürstenkörperhalter (1) selbst und der Trommel (5) besteht, wobei die Verbindung von einem schmalen Stiel (10) gebildet wird, der an dem drehbaren Bürstenkörperhalter (1) unbeweglich befestigt ist und sich in eine Aushölung (11) in der Trommel erstreckt.

3. Bürstenkörperhalterträger nach Anspruch 1, dadurch gekennzeichnet, daß das Antriebmittel aus einem Kurvenroller (21) besteht, den an dem Bürstenkörperhalter (1) befestigt ist und mittels einer Feder (24) derart gegen eine feststehende Führung (22) gedrückt wird, daß die Bewegung des Kurvenrollers (21) dem Bürstenkörperhalter (1) eine spezifische Winkeldrehung erteilt.

4. Bürstenkörperhalterträger nach Anspruch 3, dadurch gekennzeichnet, daß der Kurvenroller (21) mittels einer Stift-und-Gabelverbindung an den Bürstenkörperhalter (1) gekuppelt ist.

5. Bürstenkörperhalterträger nach Anspruch 3, dadurch gekennzeichnet, daß die feststehende Führung (22) aus einer Profilschablone oder einem Profilring besteht, die bzw. der umbeweglich am Gestell (25) einer Bürstenherstellungsmaschine derart befestigt ist, daß die Kurvenroller (21) dem Profil folgen.

6. Bürstenkörperhalterträger, wie beschrieben in irgendeinem der vorangehenden Ansprüche, dadurch gekennzeichnet, daß in der gedrehten Lage des Bürstenkörperhalters (1) der Kurvenroller (21) nicht mehr mit der feststehenden Führung (22) im Kontakt steht, während der Bürstenkörperhalter (1) im Kontakt steht mit einem regelbaren Anschlag (31), der gegenüber der Trommel (5) unbeweglich ist.

**Revendications**

1. Transporteur pour support de corps de brosse pour machine de fabrication de brosses, ce transporteur comportant au moins un support (1) de corps de brosse fixé à un tambour (5), les corps de brosse étant transférés d'un poste de traitement a un autre, à l'intervention de la rotation du tambour, tandis qu'au cours du déroulement d'un processus complet dans un poste de traitement, le support (1) de corps de brosse ne se déplace pas par rapport au tambour (5), le transporteur de support de brosse étant caractérisé en ce qu'il est muni d'un moyen par lequel le support (1) de corps de brosse est rotatif par rapport au tambour (5) dans un plan parallèle au plan du corps de brosse (6), tandis qu'il est muni d'un moyen pour faire tourner le support (1) du corps de brosse dans un angle réglable entre la fin de n'importe quel processus et le début du processus suivant, de façon à pouvoir placer le support (1) de corps de brosse dans n'importe quelle position angulaire requise par rapport au tambour (5).

2. Transporteur pour support de corps de brosse selon la revendication 1, caractérisé en ce que le moyen permettant au support (1) de corps de brosse de tourner, est constitue d'une liaison rotative entre le support (1) de corps de brosse lui-même et le tambour (5), la liaison étant constituée d'un petit arbre (10) fixé fermement au support (1) rotatif du corps de brosse et qui s'étend à travers une cavité (11) pratiquée dans le tambour.

3. Transporteur pour support de corps de brosse selon la revendication 1, caractérisé en ce que le moyen d'entraînement est constitué d'un lecteur de courbes (21) qui est fixé au support (1) de corps de brosse, tandis qu'il est pressé contre un dispositif de guidage (22) fixé, au moyen d'un ressort (24), de telle sorte que le mouvement de ce lecteur de courbes (21) imprime une rotation angulaire spécifique au support (1) de corps de brosse.

4. Transporteur pour support de corps de brosse tel que décrit dans la revendication 3, caractérisé en ce que le lecteur de courbes (21) est couplé au support (1) de corps de brosse, au moyen d'une cheville et d'une liaison en forme de fourche.

5. Transporteur pour support de corps de brosse, selon la revendication 3, caractérisé en ce que le dispositif de guidage fixe (22) est constitué d'une bague ou d'un gabarit profilé, qui est fixé à demeure au bâti (25) d'une machine de fabrication de brosses, de telle façon que le lecteur de courbes (21) suit le profil.

6. Transporteur pour support de corps de brosse selon l'une quelconque des revendications précédentes, caractérisé en ce que, tandis que le support (1) de corps de brosse se trouve en rotation, le lecteur (21) ne se trouve plus en contact avec le dispositif de guidage fixe (22), alors que le support (1) de corps de brosse se trouve en contact avec une butée réglable (31), fixée à demeure par rapport au tambour (5).

*Fig.1*

*Fig.2*

**Fig.3**

**Fig.4**

**Fig.5**

2